# EUROPÄISCHE PATENTSCHRIFT

(11) **EP 1 568 916 B1**
(45) Veröffentlichungstag und Bekanntmachung des Hinweises auf die Patenterteilung: **19.11.2014**
(21) Anmeldenummer: 05004386.8
(22) Anmeldetag: 28.02.2005
(51) Int. Cl.: F16H 1/14, A01B 71/06

(54) **Wechselradgetriebe**
Transmission with exchangeable gears
Transmission à roues dentées interchangeables

(30) Priorität: 27.02.2004 DE 102004010105; 29.05.2004 DE 102004026388
(43) Veröffentlichungstag der Anmeldung: 31.08.2005
(73) Patentinhaber: Rögelberg Holding GmbH & Co. KG, 49716 Meppen (DE)
(72) Erfinder: Pleus, Karlheinz, 49779 Oberlangen (DE); Seggering, Manfred, 49744 Geeste-Dalum (DE)
(74) Vertreter: Engelmann, Kristiana

(56) Entgegenhaltungen:
- EP-A- 0 135 156
- DE-A1- 2 611 515
- DE-A1- 3 709 769
- DE-B- 1 148 792
- DE-U- 7 507 237
- SU-A1- 838 188
- US-A- 1 697 677
- US-A- 4 042 040

## Beschreibung

Die Erfindung betrifft ein Wechselradgetriebe für vorzugsweise Bodenbearbeitungsmaschinen, insbesondere für Kreiseleggen, die zumindest ein auf einer Antriebswelle drehfest aufgenommenes Antriebszahnrad sowie zumindest ein auf einer Abtriebswelle drehfest aufgenommenes Abtriebszahnrad aufweisen, wobei wenigstens eines der Zahnräder lösbar auf seiner Welle angeordnet ist.

Für Bodenbearbeitungsmaschinen sind Getriebe bekannt, die zur Verwirklichung unterschiedlicher Übersetzungen als Wechselradgetriebe ausgebildet sind. Diese Getriebe weisen meist zwei mit Stirnrädern besetzte parallele Wellen auf, von denen eine die Antriebswelle ist. Die zweite Welle greift über ein Zahnrad in ein auf der Antriebswelle festgelegtes Zahnrad ein. Von der zweiten Welle führt dann eine Abwinklung zur Abtriebswelle und diese dann weiter zum Maschinenbalken. Diese Getriebe sind sehr voluminös und entsprechend teuer.

Zum Austausch der Stirnräder muß das Getriebegehäuse an der Seite aufgeschraubt werden. Hierbei entstehen weitere Probleme, wie z.B. die Verschmutzung des Gehäuseaußenraumes mit Öl oder die Verschmutzung der Getriebeelemente innerhalb des Gehäuses.

Ein vorbeschriebenes Getriebe ist beispielsweise aus der DE 11 48 792 B bekannt.

Des Weiteren ist aus der DE 11 48 792 B ein Getriebe bekannt, bei denen in üblicher Weise auf der Antriebswelle ein fest angeordnetes Kegelrad vorhanden ist, welches mit einem auf einer weiteren Welle angeordneten weiteren Kegelrad kämmt. Das Getriebegehäuse ist verbolzt, das gezeigte Getriebe ist kein Wechselradgetriebe. Entsprechend weist das Getriebe nur ein Übersetzungsverhältnis auf.

In der DE 37 097 69 A1 ist ein Kegelradgetriebe gezeigt mit zwei miteinander kämmenden Kegelrädern, wobei ein auf einer Abtriebswelle befindliches Kegelrad zwecks Drehrichtungsumkehr auf einem auf derselben Welle befindlichen Bereich festgelegt werden kann. Dieses Dokument offenbart die Merkmale des Oberbegriffs des Anspruchs 1.

Es ist daher Aufgabe der vorliegenden Erfindung, ein gattungsgemäßes Getriebe kompakter zu bauen. Diese Aufgabe wird durch ein Getriebe mit den Merkmalen des Anspruches 1 gelöst.

Das erfindungsgemäße Getriebe zeichnet sich dadurch aus, daß Antriebs- und Abtriebszahnrad bereits als miteinander kämmende Kegelräder ausgebildet sind. Dies verringert den benötigten Bauraum erheblich, so daß ein solcher Art ausgebildetes Getriebe deutlich weniger voluminös baut und entsprechend günstiger herzustellen ist. Gegenüber dem beschriebenen Stand der Technik kann so eine komplette Welle gespart werden. Darüber hinaus ist ein erfindungsgemäßes Getriebe der Gestalt ausgebildet, dass die Antriebswelle unter Verbleib Ihrer Lage an ihrem zum Austausch aus dem Getriebegehäuse nach außen herausziehbar ist. Hierdurch ist keine aufwendige Demontage notwendig, um die Kegelräder zu tauschen. Die Welle kann einfach wieder in das Getriebe eingeführt werden. Nachfolgend ist unter einem Gehäuse regelmäßig das Getriebegehäuse zu verstehen.

Bevorzugt ist zumindest eines der Kegelräder austauschbar mit seiner Welle verbunden, wobei "austauschbar" nicht nur die Austauschbarkeit des Kegelrades gegen ein weiteres Kegelrad, sondern ebenfalls eine Austauschbarkeit bezüglich seiner Position im Getriebe bedeutet. Ein Kegelrad eines erfindungsgemäßen Getriebes ist beispielsweise variabel auf seiner Welle positionierbar.

Abhängig von den verwendeten Kegelrädern ergeben sich verschiedene Getriebekenngrößen, vorzugsweise Übersetzungsverhältnisse. Bei der Verwendung von zwei gegeneinander austauschbaren Kegelrädern lassen sich zwei verschiedene Übersetzungen realisieren, während durch den Austausch des Kegelradpaares selbst weitere Möglichkeiten gegeben sind, um die geforderten Getriebekenngrößen zu erzeugen. Der Getriebeinnertraum ist dazu groß genug ausgebildet, um alternativ andere Kegelradpaare zuzulassen.

Bevorzugtermaßen ist das Getriebe nach der Erfindung mit einem Getriebegehäuse ausgestattet, welches eine mit einer Abdeckung verschließbare Öffnung im Bereich seiner Oberseite aufweist. Das erfindungsgemäße Getriebe ist daher oben zu öffnen und die Gefahr von Verschmutzungen des Gehäuseaußenraumes durch aus dem Gehäuseinnenraum austretendes Öl verringert sich gegenüber den seitlich zu öffnenden Getrieben nach dem Stand der Technik. Auch ist ein höherer Ölstand, z.B. bis auf Höhe der Lager der Antriebswelle, und damit eine verbesserte Schmierung der Kegelräder möglich. Die Abdeckung kann vorteilhaft als einfache Abdeckplatte ausgebildet sein und ist somit leicht und günstig zu fertigen.

Eine weitere vorteilhafte Ausführungsform eines erfindungsgemäßen Getriebes weist eine einzige Getriebekammer auf. Auch hierdurch verringert sich der bauliche Aufwand gegenüber den Stirnradwechselgetrieben, die zumeist zwei Getriebebereiche aufweisen, von denen einer seitlich zugängig ist und die Wechselräder aufnimmt.

Weitere Vorteile der Erfindung können den übrigen Unteransprüchen und der nachfolgenden Figurenbeschreibung von Ausführungsbeispielen entnommen werden. In den Zeichnungen zeigt:
- Fig. 1: ein erfindungsgemäßes Getriebe,
- Fig. 2: den Gegenstand nach Fig. 1 mit gegeneinander getauschten Kegelrädern,
- Fig. 3: den Gegenstand nach Fig. 1 mit geändertem Abtriebswellendrehsinn und
- Fig. 4: ein weiteres erfindungsgemäßes Getriebe ohne Durchtrieb der Antriebswelle (Nebenantrieb),
- Fig. 5: den Gegenstand nach Fig. 1 mit einer Ausschnittsvergrößerung im Bereich der Anlage der Antriebswelle an der Lagerbuchse.

Das dargestellte Getriebe weist eine zumindest teilweise in einem Getriebegehäuse 1 befindliche Antriebswelle 3 auf, die um eine Drehachse 4 rotiert. Eine Abtriebswelle 17 mit einer Drehachse 21 verläuft größtenteils in einem unteren Teil 6 des Getriebegehäuses 1, der an einem oberen Teil 2 des Getriebegehäuses 1 mit Befestigungsmitteln 9 angeflanscht ist.

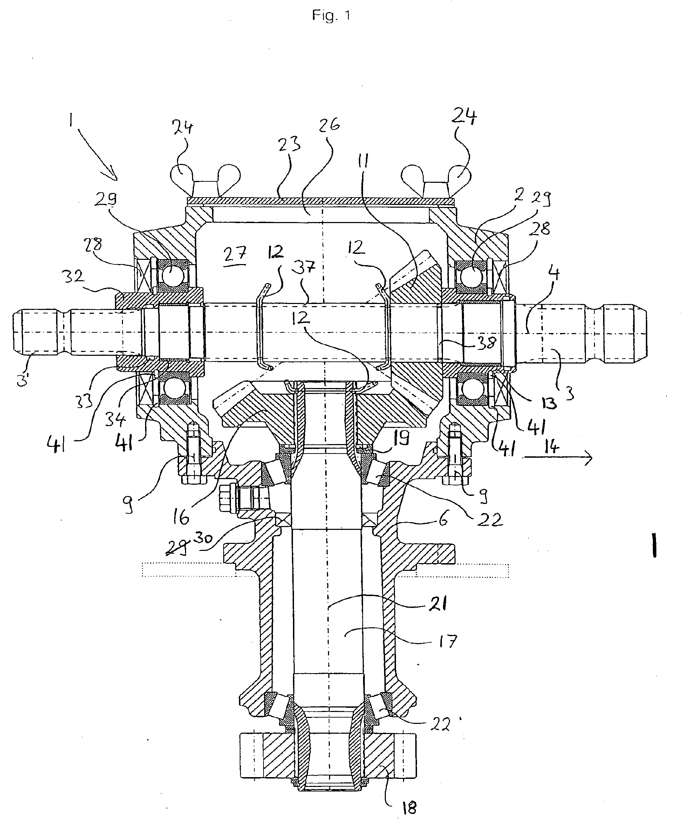

Auf der Antriebswelle 3 ist in Fig. 1 ein Antriebskegelrad 11 über ein Keilwellenprofil 37 drehfest aufgenommen, welches mit Hilfe eines Sicherungselementes 12 lösbar festgelegt ist. Auf einer Seite liegt das Antriebskegelrad 11 an einer Buchse 13 an, die eine mögliche Bewegung des Antriebskegelrades 11 in Richtung 14 begrenzt. Auf der anderen Seite verhindert das Sicherungselement 12 einen Versatz des Antriebskegelrades 11 in eine der Richtung 14 entgegengesetzte Richtung.

Ein Abtriebskegelrad 16 ist auf dem oberen Ende der Abtriebswelle 17 gelagert. Die beiden Kegelräder 11 und 16 kämmen erfindungsgemäß miteinander und übertragen so das Drehmoment von der Antriebswelle 3 auf die Abtriebswelle 17 mit der durch die Kegelräder 11 und 16 vorgegebener Übersetzung. An dem dem Abtriebskegelrad 16 gegenüberliegenden unteren Endbereich der Abtriebswelle 17 kann wie dargestellt ein weiteres Ritzel 18 angeordnet sein, das den Übergang beispielsweise zu einem Maschinenbalken bei gleichzeitig möglicher weiterer Drehzahlwandlung bildet. Durch diese weitere Übersetzung aus dem Getriebegehäuse 1 heraus, läßt sich die räumliche Gesamterstreckung des Getriebes weiter reduzieren. Statt eines direkten Zahneingriffs auf den Maschinenbalken über das Ritzel 18 können auch andere Möglichkeiten des Kraftübergangs oder Kupplungen verwendet werden.

Bevorzugt kreuzen sich Antriebsdrehachse 4 und Abtriebsdrehachse 21 in einem Winkel von 90°, was für einen Großteil von beispielsweise Bodenbearbeitungsgeräten optimal ist. Abhängig von der Anforderung an das Getriebe kann auch ein anderer Winkel zwischen Antriebsdrehachse 4 und Abtriebsdrehachse 7 ausgebildet sein.

Das Abtriebskegelrad 16 ist über ein Keilwellenprofil drehfest auf der Antriebswelle 17 festgelegt; andere formschlüssige Verbindungen sind ebenfalls möglich. Anders als das Antriebskegelrad 11 ist das Abtriebskegelrad 16 in der Figurenebene jedoch nach unten durch ein weiteres, werkseitig montiertes Sicherungselement 19 begrenzt. Mit Hilfe dieses Sicherungselements 19 ist die Abtriebswelle 17 auch in ihrer Achsrichtung 7 festgelegt, so daß die Einstellung der Lagerung der Abtriebswelle 17 unbeeinflußt ist von der Befestigung des auf der Antriebswelle 17 befindlichen Abtriebskegelrades 16. Wird das Abtriebskegelrad 16 zum Austausch von der Welle 17 entfernt, kann diese so nicht durch Schwerkraftwirkung aus dem Getriebegehäuse 1 herausrutschen. Das Antriebskegelrad 11 hingegen ist zwischen Lagern 29 der Antriebswelle 3 angeordnet, womit sich gegenüber dem Stand der Technik erhebliche Vorteile aufgrund einer erhöhten Stabilität sowie weiterhin verminderte Anforderungen an den Platzbedarf ergeben. Ein solcher Art ausgestaltetes erfindungsgemäßes Getriebe baut insgesamt stabiler und günstiger.

Die Sicherungselemente 12 zur Festlegung der Kegelräder 11 und 16 sind bei dem Ausführungsbeispiel gemäß Fig. 1 als in entsprechende Ausnehmungen in den Achsen eingreifende Klammerelemente bzw. Federstecker ausgebildet. Diese können auf einfache Art und Weise auf die jeweilige Achse aufgeschoben werden und sorgen für eine Begrenzung in Richtung der entsprechenden Achsrichtung. Statt Klammern können beispielsweise auch Paßstifte verwendet werden. Durch die Abdeckung 23, die mit Hilfe von Befestigungselementen 24 in einem oberen Bereich des Getriebes eine Öffnung 26 verschließt, ist der Getriebeinnenraum 27 gegenüber dem Außenraum abgedichtet. Weitere dynamische Dichtungen 28, die sich im Bereich der Lager 29 befinden, sowie eine dynamische Dichtung 30 verhindern den Austritt von Schmierstoffen in den Getriebeaußenraum, bzw. den Eintritt von Schmutz in das Getriebe.

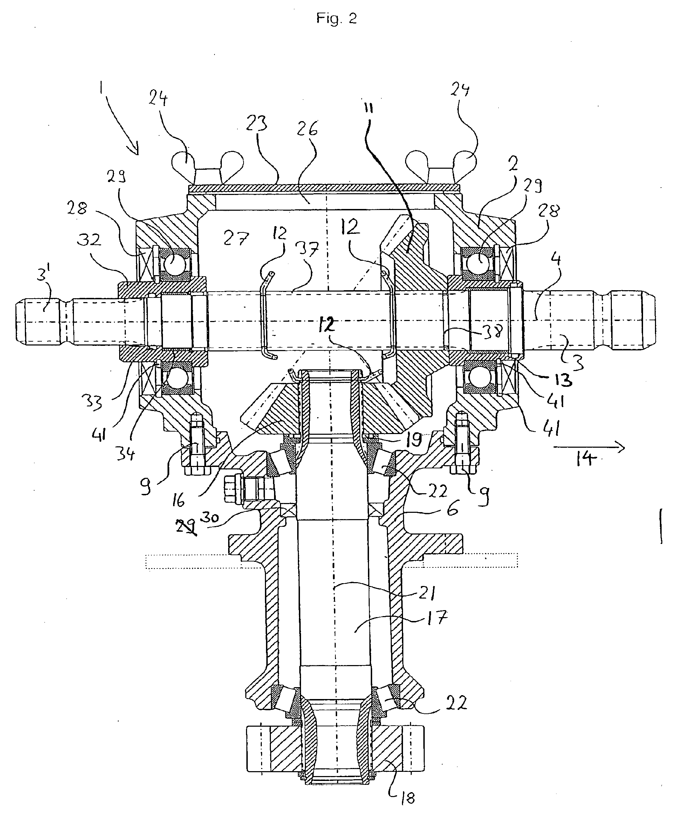

Zum Austausch der beiden Kegelräder 11 und 16 gegeneinander (Fig. 2) oder auch des Kegelradpaares 11, 16 gegen ein weiteres Kegelradpaar ist bei der dargestellten Ausbildung der Erfindung die Abdeckung 23 vom Gehäuse 1 zu entfernen, um so in den Getriebeinnenraum 27 eingreifen zu können. Nach dem anschließenden Lösen, bzw. Abziehen der Sicherungselemente 12 von der Antriebswelle 3 kann diese in Richtung 14 aus dem Getriebegehäuse 1 herausgezogen werden.

Bei der in den Fig. 1 bis 3 dargestellten Ausführungsform ist die Antriebswelle 3 mit einem Durchtrieb durch das Getriebegehäuse 1 ausgestaltet und weist so einen Nebenabtrieb 3' auf. Eine als Schmutzabstreifer ausgebildete Lagerbuchse 32 greift in die Nuten des Keilwellenprofils des Nebenabtriebs 3' der Welle 3 und verhindert so das Eindringen zumindest von grobem Schmutz, wenn die Welle 3 aus dem Getriebegehäuse 1 hinausgezogen und dabei der Nebenabtrieb 3' zunächst in das Getriebegehäuse 1 hineingezogen wird. Die Lagerbuchse 32 selbst ist zum einen statisch, beispielsweise mit einem als O-Ring ausgebildeten Dichtelement 33, und zum anderen mit einer bereits beschriebenen Dichtung 28 gegenüber dem Getriebegehäuse 1 abgedichtet. Zwischen Lagerbuchse 32 und Antriebswelle 3 kann sich weiterhin ein beispielsweise als Gleitbuchse ausgebildetes Gleitlager 34 befinden, das der Vermeidung von Passungsrost dient. Natürlich sind auch andere bekannte Maßnahmen zur Vermeidung dieser Alterungserscheinung denkbar; ebenso kann der Schmutzabstreifer direkt an der Welle anliegen, ohne Teil der Lagerbuchse 32 zu sein.

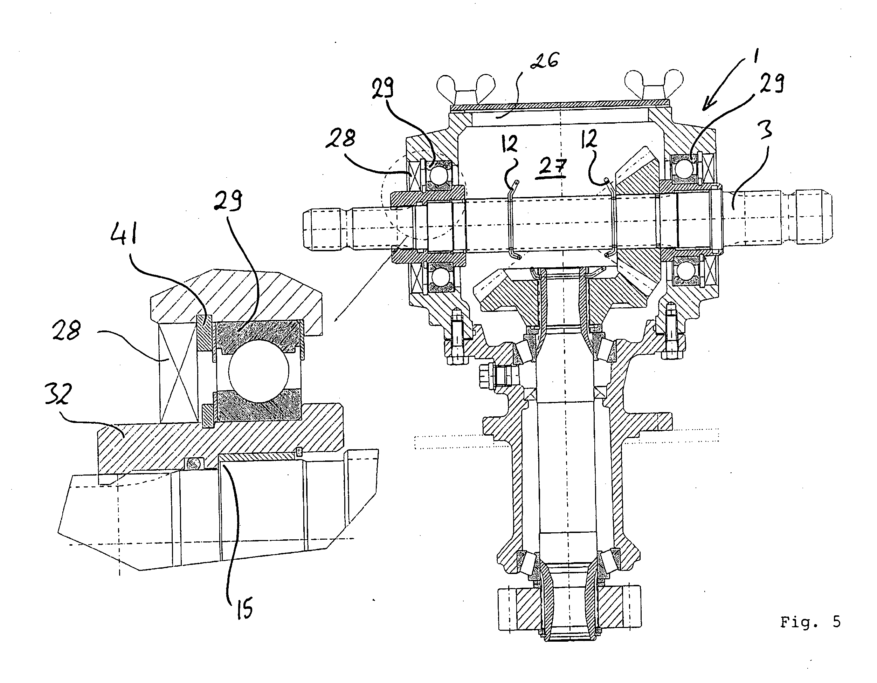

Wie insbesondere in Fig. 5 gezeigt, kann durch die Ausbildung einer Schulter an zumindest einer der Buchsen 32 bzw. 13 eine Bewegung der Antriebswelle 3 entgegen der Richtung 14 verhindert werden. Damit ist die Welle 3 lediglich in Richtung 14 aus dem Getriebegehäuse 2 herausziehbar. Die Buchsen 32 und 13 sowie die Lager 29 werden durch bekannte Sicherungselemente wie z.B. Sicherungsringe 41 festgelegt. Das Getriebegehäuse 1 ist sehr stabil, da die Kegelräder 11, 16 durch die Öffnung 26 ausgetauscht werden können und keine anderweitige aufwendige Demontage notwendig ist.

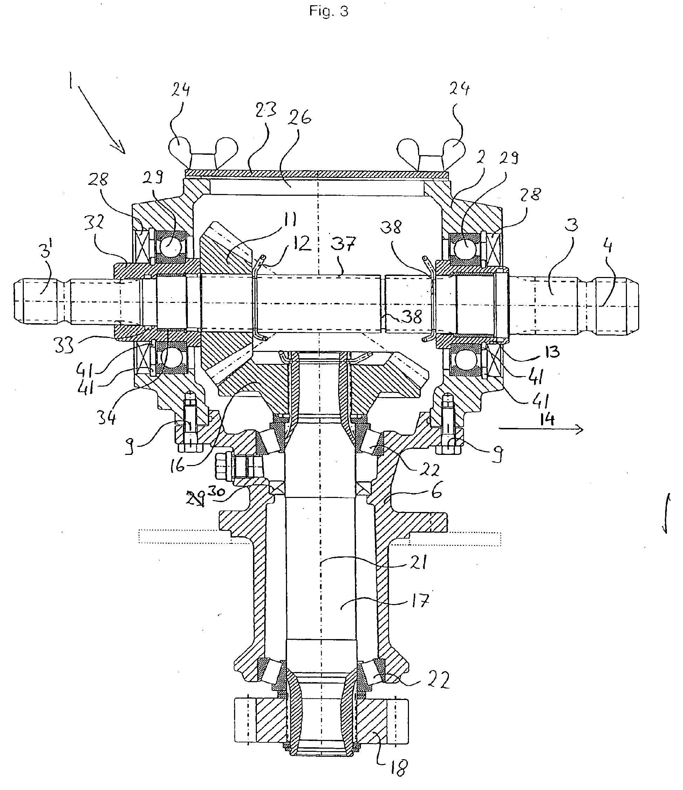

Die Antriebswelle 3 ist im Getriebegehäuse lösbar in den Lagerbuchsen 32 bzw. 13 fixiert. Eine Axialbewegung der Welle entgegen der Herausziehrichtung 14 wird durch die Anlage einer Schulter 15 der Antriebswelle 3 an der Lagerbuchse 32 vermieden, wenn das Antriebswellenkegelrad 11 an der Lagerbuchse 13 anliegt. Entsprechend wird die Bewegung der Antriebswelle 3 in axialer Richtung 14 dadurch begrenzt, daß das an der Lagerbuchse 13 anliegende Antriebswellenkegelrad 11 über das Sicherungselement 12 auf der Antriebswelle 3 festgelegt ist. Die Axialkräfte entgegen der Herausziehrichtung 14 sind größer, wenn das Antriebswellenkegelrad 11 zur Umkehr der Drehrichtung, wie in Fig. 3 gezeigt, auf der anderen Seite der Welle festgelegt ist. In diesem Fall ist das Antriebswellenkegelrad 11 ebenfalls zwischen einem Sicherungselement 12 und der Lagerbuchse 32 auf der Antriebswelle 3 festgelegt, so daß die Lagerbuchse 32 wesentlich über die Anlage des Kegelrades 11 und nicht über die Schulter 15 die Axialkräfte, die von Antriebswellenkegelrad 11 ausgeübt werden, aufnimmt.

Zum Wechseln der Kegelräder 11 und 16 gegeneinander bzw. zum Umsetzen des Kegelrades 11 auf der Antriebswelle 3 sind nur wenige einfache Arbeitsschritte notwendig. Nach dem Lösen des Getriebegehäusedeckels 23 müssen lediglich die Sicherungselemente 12 von der Antriebswelle 3 entfernt werden. Die Antriebswelle 3 ist dann durch das Antriebswellenkegelrad 11 hindurch aus dem Getriebegehäuse 1 in Richtung 14 herausziehbar. Im Gegensatz zu dem bekannten Stand der Technik müssen hierzu keine weiteren Eingriffe in die Integrität des Getriebes vorgenommen werden. Weitere Elemente wie Buchsen, Lager, Dichtungen bleiben an ihrem Platz, so daß nicht nur das problemlose Herausziehen der Welle 3 aus dem Getriebegehäuse, sondern anschließend auch das einfache Wiedereinführen der Welle in das Getriebe soweit möglich ist, bis sich die Welle wieder an ihrem durch die Anlage der Schulter 15 an der Buchse 32 definierten Platz befindet. Gleichzeitig kann die Welle 3 wie dargestellt auch eine weitere Schulter der Welle ausbilden, die im Bereich des anderen Lagers 29 bzw. der Buchse 13 in Anlage gerät, wenn sich die Welle 3 an ihrem definierten Platz befindet.

Entgegen der Herausziehrichtung 14 verjüngt sich der maximale Außendurchmesser der Welle 3 vorzugsweise in Stufen, was für eine eindeutige Plazierung der Antriebswelle in dem Getriebe von Vorteil ist. Hierfür sind die Lagerbuchsen 32 und 13 mit verschiedenen Innendurchmessern ausgebildet, wobei der sich ändernde maximale Außendurchmesser der Welle 3 mit der Veränderung des Innendurchmessers der Lagerbuchsen 13, 32 korrespondiert, also in Herausziehrichtung 14 größer wird. Ein fehlerhafter Zusammenbau des Getriebes nach einem Austausch der Kegelräder 11, 16 wird durch die erfindungsgemäße Konstruktion des Wechselradgetriebes vermieden.

Um nun bei herausgezogener Antriebswelle das bisherige Abtriebskegelrad 16 an die in Fig. 1 gezeigte Position des Antriebskegelrades 11 zu bringen, muß nach dem Herauslösen der Antriebswelle 3 aus dem Getriebegehäuse das auf der Abtriebswelle 17 befindliche Sicherungselement 12 gelöst werden. Anschließend wird das Antriebswellenkegelrad 11 nach dem Ablösen des Abtriebswellenkegelrades 16 auf die Abtriebswelle 17 gesteckt und mit einem Sicherungselement 12 fixiert. Zum Einführen der Antriebswelle 3 in das Getriebe wird das Kegelrad 16 seitlich in etwa so in ein Getriebegehäuse 1 gehalten, daß die Bohrung des Kegelrades 16 in etwa mit der Öffnung in der Seitenwand des Getriebegehäuses 1 übereinstimmt. Durch die angeschrägten Enden der Antriebswelle 3 läßt sich die Antriebswelle 3 leicht in die Bohrung des Kegelrades 11 einführen, so daß nach dem vollständigen Einführen der Welle 3 lediglich noch das Sicherungselement 12 das Kegelrad fixiert und der Getriebegehäusedeckel 23 wieder festgelegt werden muß.

Für einen sicheren Sitz der Kegelräder auf den Wellen sind Antriebs- und Abtriebswelle 3, 17 mit identischen Keilwellenprofilen 37 ausgestattet. Neben der Umkehr der Drehrichtung der Abtriebswelle 17 läßt sich durch den Austausch der Kegelräder 11, 16 gegeneinander ein anderes Übersetzungsverhältnis erzeugen. Die neue Position der Kegelräder 11, 16 nach dem Austausch gegeneinander ist in Fig. 2 gezeigt, wobei ebenfalls die Bezugsziffern vertauscht wurden, da das Antriebskegelrad 11 aus Fig. 1 nun zum Abtriebskegelrad 16 geworden ist und umgekehrt.

Zur Umkehrung des Drehsinns der Abtriebswelle 17 ist vorgesehen, die Position des Antriebskegelrades 11 aus Fig. 1 auf der Antriebswelle zu verändern, wie in Fig. 3 dargestellt ist. Entsprechend weist die Abtriebswelle 3 symmetrisch zur Abtriebsdrehachse 7 einen weiteren Bereich zur Aufnahme des Kegelrades 11 auf. Ein Sicherungselement 12 sichert das Kegelrad 11 in der Position in Fig. 3 gegen Versatz in Richtung 14. Um einen Versatz der Welle 3 in Richtung 14 zu verhindern, wird eines der beiden auf der Welle 3 befindlichen Sicherungselemente 12 in eine umlaufende Nut 38 der Antriebswelle 3 unmittelbar vor der Lagerbuchse 13 eingebracht und legt damit die Welle 3 fest. Insgesamt befinden sich drei Nuten 38 auf der Welle 3, die für deren Festlegung, bzw. den festen Sitz eines Kegelrades vorgesehen sind.

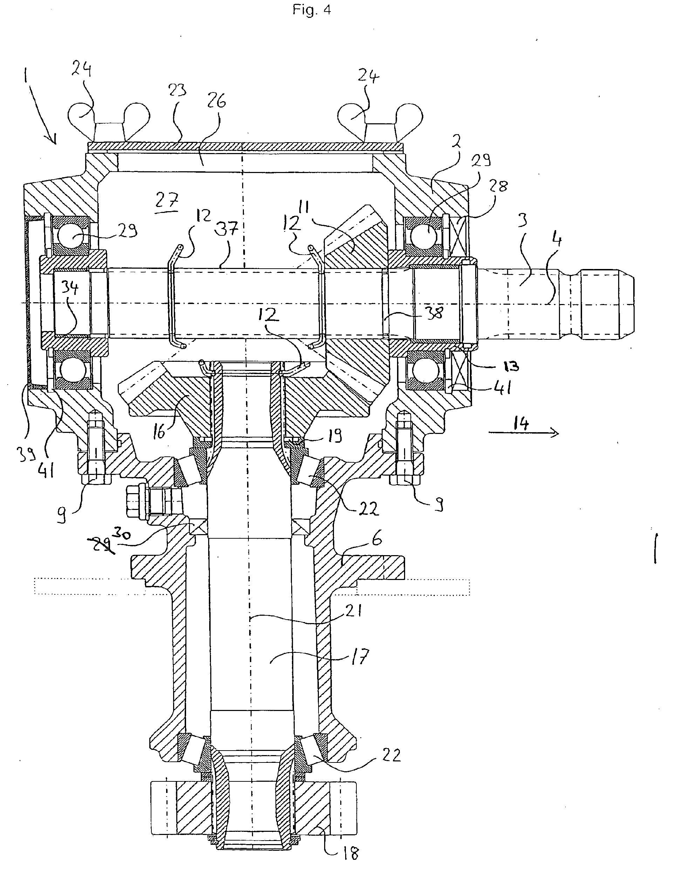

Das in Fig. 4 dargestellte Getriebe weist keinen Nebenabtrieb auf, so daß bei dem ansonsten baugleichen Getriebegehäuse 1 die in der Figur linke Lagerung der Antriebswelle 3 gegenüber den in den übrigen Abbildungen beschriebenen Ausbildungsformen geändert wurde. Die dortige Getriebegehäuseseite ist entsprechend mit einer vorzugsweise lösbaren Abdeckung 39 verschlossen, so daß das Getriebe bei Bedarf auch mit einer einen Nebenabtrieb 3' aufweisenden Antriebswelle 3 (Fig. 1, 2 und 3) nachrüstbar ist.

Die dargestellten Getriebe werden bevorzugt in Bodenbearbeitungsmaschinen, insbesondere Kreiseleggen eingesetzt, wodurch sich die erfindungsgemäßen Kreiseleggen deutlich gegenüber den bisherigen Kreiseleggen bezüglich Kosten und Stabilität absetzen können.

## Patentansprüche

1. Wechselradgetriebe für vorzugsweise Bodenbearbeitungsmaschinen, insbesondere für Kreiseleggen, mit zumindest einem auf einer Antriebswelle (3) drehfest aufgenommenem Antriebszahnrad (11) und zumindest einem auf einer Abtriebswelle (17) drehfest aufgenommenem Abtriebszahnrad (16), wobei Antriebszahnrad (11) und Abtriebszahnrad (16) lösbar auf der jeweiligen Welle (3, 17) angeordnet sind, und das Wechselradgetriebe ein Getriebegehäuse aufweist, **dadurch gekennzeichnet, dass** Antriebs- und Abtriebszahnrad (11, 16) als miteinander kämmende und gegeneinander austauschbare Kegelräder ausgebildet sind und die Antriebswelle (3) unter Verbleib ihrer Lager (29) an ihrem Platz zum Austausch aus dem Getriebegehäuse (1) nach außen herausziehbar ist.

2. Getriebe nach Anspruch 1, **gekennzeichnet durch** eine einzige Getriebekammer (27).

3. Getriebe nach einem der Ansprüche 1 oder 2, **dadurch gekennzeichnet, dass** das Antriebszahnrad (11) auf seiner Antriebswelle (3) in eine die Drehrichtung der Abtriebswelle (17) umkehrende Position verlagerbar ist.

4. Getriebe nach Anspruch 3, **dadurch gekennzeichnet, dass** die Antriebswelle (3) das Antriebszahnrad (11) festlegende Bereiche zur Aufnahme aufweist, die in etwa symmetrisch bezüglich der Drehachse (21) der anderen Welle (17) angeordnet sind.

5. Getriebe nach einem der Ansprüche 1 bis 4, **dadurch gekennzeichnet, dass** wenigstens ein Kegelrad (11, 16) zum einfachen Austausch mit zumindest einem lösbaren Sicherungselement (12) auf seiner Welle (3, 17) festlegbar ist.

6. Getriebe nach Anspruch 5, **dadurch gekennzeichnet, dass** die Antriebswelle (3) durch das Sicherungselement (12) des Antriebszahnrades (11) in axialer Richtung (14) im Getriebegehäuse (1) festgelegt ist.

7. Getriebe nach einem der vorherigen Ansprüche, **gekennzeichnet durch** einen Schmutzabstreifer, der zur Reinigung eines im Betrieb außenliegend verschmutzenden und in das Getriebegehäuse (1) hineinziehbaren Bereichs der Antriebswelle (3) vorgesehen ist.

8. Getriebe nach Anspruch 7, **dadurch gekennzeichnet, dass** eine Lagerbuchse (32) als Schmutzabstreifer ausgebildet ist.

9. Getriebe nach einem der Ansprüche 1 bis 8, **dadurch gekennzeichnet, dass** das Getriebegehäuse (1) eine mit einer Abdeckung (23) schließbare Öffnung (26) im Bereich einer Oberseite des Getriebes aufweist.

10. Getriebe nach einem der Ansprüche 1 bis 9, **dadurch gekennzeichnet, dass** die Abtriebswelle (17) mit einem den Übergang zu einem Maschinenbalken bildenden Ritzel (18) zur weiteren Drehzahlwandlung versehen ist.

11. Getriebe nach einem der Ansprüche 1 bis 10, **dadurch gekennzeichnet, dass** das Abtriebszahnrad (16) außerhalb eines von Lagern (22) seiner Abtriebswelle (17) begrenzten Bereiches im Getriebeinnenraum (27) angeordnet ist.

12. Getriebe nach Anspruch 11, **dadurch gekennzeichnet, dass** die Abtriebswelle (17) durch ihre von der Festlegung des Abtriebszahnrades (16) unabhängige Lagerung drehbar festgelegt ist.

13. Getriebe nach einem der Ansprüche 1 bis 12, **dadurch gekennzeichnet, dass** das Antriebszahnrad (11) innerhalb eines von Lagern (29) auf der Antriebswelle (3) begrenzten Bereiches im Getriebeinnenraum (27) angeordnet ist.

14. Getriebe nach einem der Ansprüche 1 bis 13, **gekennzeichnet durch** einen Nebenabtrieb (3').

15. Getriebe nach Anspruch 14, **dadurch gekennzeichnet, dass** der Nebenabtrieb (3') von der Antriebswelle (3) ausgebildet wird.

16. Kreiselegge, **gekennzeichnet durch** ein Getriebe nach einem der vorherigen Ansprüche.

## Claims

1. Change gear unit, preferably for tillage machines, in particular for circular spike harrows, comprising at least one driving toothed wheel (11) received on a drive shaft (3) for rotation therewith and at least one output toothed wheel (16) received on an output shaft (17) for rotation therewith, the driving toothed wheel (11) and output toothed wheel (16) being detachably arranged on the respective shaft (3, 17), and the change gear unit having a gear unit housing, **characterised in that** the driving and output toothed wheels (11, 16) are formed as bevel gears that mesh together and are interchangeable for one another and the drive shaft (3) can be withdrawn outwards out of the gear unit housing (1), for the purpose of interchanging, while the bearings (29) thereof remain in position.

2. Gear unit according to claim 1, **characterised by** one single gear unit chamber (27).

3. Gear unit according to either claim 1 or claim 2, **characterised in that** the driving toothed wheel (11) is displaceable on the drive shaft (3) thereof into a position which reverses the direction of rotation of the output shaft (17).

4. Gear unit according to claim 3, **characterised in that** the drive shaft (3) has regions which fix the driving toothed wheel (11), are intended for receiving, and are arranged approximately symmetrically to the axis of rotation (21) of the other shaft (17).

5. Gear unit according to any of claims 1 to 4, **characterised in that** at least one bevel gear (11, 16) is fixable on the shaft (3, 17) thereof by at least one detachable securing element (12) for the purpose of simple interchange.

6. Gear unit according to claim 5, **characterised in that** the drive shaft (3) is fixed in the axial direction (14) in the gear unit housing (1) by means of the securing element (12) of the driving toothed wheel (11).

7. Gear unit according to any of the preceding claims, **characterised by** a dirt scraper which is intended to clean a region of the drive shaft (3) that becomes dirty externally during operation and can be drawn into the gear unit housing (1).

8. Gear unit according to claim 7, **characterised in that** a bearing bush (32) is formed as the dirt scraper.

9. Gear unit according to any of claims 1 to 8, **characterised in that** the gear housing (1) has an opening (26), which is closable by a cover (23), in the region of a top side of the gear unit.

10. Gear unit according to any of claims 1 to 9, **characterised in that** the output shaft (17) is provided with a pinion (18) which forms the transition to a machine beam and is intended for additional speed conversion.

11. Gear unit according to any of claims 1 to 10, **characterised in that** the output toothed wheel (16) is arranged in the gear unit inner chamber (27) outside a region delimited by bearings (22) of the output shaft (17) thereof.

12. Gear unit according to claim 11, **characterised in that** the output shaft (17) is rotationally fixed by the bearing thereof, which is independent of the fixing of the output toothed wheel (16).

13. Gear unit according to any of claims 1 to 12, **characterised in that** the driving toothed wheel (11) is arranged in the gear unit inner chamber (27) within a region delimited by bearings (29) on the drive shaft (3).

14. Gear unit according to any of claims 1 to 13, **characterised by** an additional output drive (3').

15. Gear unit according to claim 14, **characterised in that** the additional output drive (3') is formed from the drive shaft (3).

16. Circular spike harrow, **characterised by** a gear unit according to any of the preceding claims.

## Revendications

1. Transmission à roues dentées interchangeables pour des machines de travail du sol de préférence, en particulier des herses rotatives, avec au moins une roue dentée menante (11) reçue de manière solidaire en rotation sur un arbre d'entraînement (3) et au moins une roue dentée menée (16) reçue de manière solidaire en rotation sur un arbre de sortie (17), la roue dentée menante (11) et la roue dentée menée (16) étant disposées de manière détachable sur l'arbre respectif (3, 17), et la transmission à roues dentées interchangeables présentant un boîtier de transmission, **caractérisée en ce que** les roues dentées menantes et menées (11, 16) sont réalisées comme des roues coniques s'engrenant et interchangeables et l'arbre d'entraînement (3) peut être retiré vers l'extérieur hors du boîtier de transmission (1) en laissant son palier (29) à sa place à des fins de remplacement.

2. Transmission selon la revendication 1, **caractérisée par** une seule chambre de transmission (27).

3. Transmission selon l'une quelconque des revendications 1 ou 2, **caractérisée en ce que** la roue dentée menante (11) peut être déplacée sur son arbre d'entraînement (3) dans une position inversant le sens de rotation de l'arbre de sortie (17).

4. Transmission selon la revendication 3, **caractérisée en ce que** l'arbre d'entraînement (3) présente des zones fixant la roue dentée menante (11) pour la réception qui sont agencées à peu près symétriquement par rapport à l'axe de rotation (21) de l'autre arbre (17).

5. Transmission selon l'une quelconque des revendications 1 à 4, **caractérisée en ce qu'**au moins une roue conique (11, 16) peut être fixée pour le simple remplacement avec au moins un élément de blocage détachable (12) sur son arbre (3, 17).

6. Transmission selon la revendication 5, **caractérisée en ce que** l'arbre d'entraînement (3) est fixé par l'élément de blocage (12) de la roue dentée menante (11) dans le sens axial (14) dans le boîtier de transmission (1).

7. Transmission selon l'une quelconque des revendications précédentes, **caractérisée par** un racleur d'impuretés qui est prévu pour le nettoyage d'une zone de l'arbre d'entraînement (3) souillant l'extérieur en fonctionnement et pouvant être rentré dans le boîtier de transmission (1).

8. Transmission selon la revendication 7, **caractérisée en ce qu'**un coussinet (32) est réalisé comme un racleur d'impuretés.

9. Transmission selon l'une quelconque des revendications 1 à 8, **caractérisée en ce que** le boîtier de transmission (1) présente une ouverture (26) refermable avec un recouvrement (23) dans la zone d'un côté supérieur de la transmission.

10. Transmission selon l'une quelconque des revendications 1 à 9, **caractérisée en ce que** l'arbre de sortie (17) est pourvu d'un pignon (18) formant le passage à une barre de machine pour la conversion supplémentaire de la vitesse de rotation.

11. Transmission selon l'une quelconque des revendications 1 à 10, **caractérisée en ce que** la roue dentée menée (16) est agencée en dehors d'une zone délimitée par des paliers (22) de son arbre de sortie (17) dans l'espace intérieur de transmission (27).

12. Transmission selon la revendication 11, **caractérisée en ce que** l'arbre de sortie (17) est fixé de manière rotative par son logement indépendant de la fixation de la roue dentée menée (16).

13. Transmission selon l'une quelconque des revendications 1 à 12, **caractérisée en ce que** la roue dentée menante (11) est agencée dans une zone délimitée par des paliers (29) sur l'arbre d'entraînement (3) dans l'espace intérieur de transmission (27).

14. Transmission selon l'une quelconque des revendications 1 à 13, **caractérisée par** une prise de force (3').

15. Transmission selon la revendication 14, **caractérisée en ce que** la prise de force (3') est réalisée par l'arbre d'entraînement (3).

16. Herse rotative **caractérisée par** une transmission selon l'une quelconque des revendications précédentes.
